# EUROPEAN PATENT SPECIFICATION

(11) **EP 4 100 657 B1**
(45) Date of publication and mention of the grant of the patent: **17.07.2024**
(21) Application number: 20917934.0
(22) Date of filing: 07.02.2020
(51) Int. Cl.: F16C 33/66, F16N 7/22, B01D 27/06, B01D 29/23, B01D 35/30, F16C 33/10, F16N 39/06, B01D 29/90

(54) **TWO-PIECE OIL FILTER ASSEMBLY FOR PUMPS**
ZWEITEILIGE ÖLFILTERANORDNUNG FÜR PUMPEN
ENSEMBLE FILTRE À HUILE EN DEUX PARTIES POUR POMPES

(43) Date of publication of application: 14.12.2022
(73) Proprietor: ITT Manufacturing Enterprises LLC, Wilmington, DE 19801 (US)
(72) Inventor: KOHBERGER, Cynthia Ann, Wilmington, Delaware 19801 (US); SALERNO, John Charles, Wilmington, Delaware 19801 (US); SULLIVAN, Susan Elaine, Wilmington, Delaware 19801 (US); DEWAELE, Kevin Michael, Wilmington, Delaware 19801 (US)
(74) Representative: Elkington and Fife LLP
(86) International application number: PCT/US2020/017144
(87) International publication number: WO 2021/158231

(56) References cited:
- EP-A2- 0 232 978
- DE-A1- 102009 033 624
- US-A- 2 877 902
- US-A- 2 877 902
- US-A- 5 150 769
- US-A1- 2009 114 254
- US-A1- 2018 347 631
- US-A1- 2018 347 631

## Description

### BACKGROUND

Unless otherwise indicated herein, the materials described in this section are not prior art to the claims in this application and are not admitted as prior art by inclusion in this section.

Pump assemblies include a bearing housing containing a bearing assembly with a shaft rotated by a motor for turning an impeller of a pump. Over the operational life of a pump, a bearing housing can accumulate contaminants, which can cause premature bearing failure. The contaminants can be trapped in the bearing housing and circulate through the bearings. The contaminants may also include debris resulting from bearing wear over time, as well as, water that may seep into the bearing the bearing housing from condensation, etc.

US 2018/347631 A1 describes a bearing housing assembly featuring a bearing housing having a bearing housing wall portion with a bearing assembly chamber for receiving a bearing assembly and a shaft to be rotated.

US 2877902 A describes oil filters of the throw-away type in which the filter cartridge is permanently secured inside the filter shell, and more particularly to a full-flow filter of the throw-away type.

EP 0232978 A2 describes a self-lubricating and self-cleansing bearing comprising a casing having a bore in which is mounted a rotatable shaft supported by sealed bearings.

### SUMMARY

The present disclosure generally describes two-piece oil filter assembly for pumps and methods associated therewith.

According to some examples, there is provided an apparatus according to claim 1.

According to other examples, the filter assembly may further include a set of threads on a first portion of an outside surface of the plug portion and may be configured to be secured to the filter cavity through another set of complementary threads on an inside surface of the filter cavity. A second portion of an outside surface of the plug portion may be knurled for manual placement and removal of the filter assembly. The plug portion may include and adapter portion that defines a plug hole configured to pass the contaminated oil from the oil path within the housing to the filter portion. The filter assembly may further include a plurality of moisture absorbing beads inside the filter portion to remove moisture from the oil. The bearing assembly may be a ball-ball bearing assembly or a sleeve-ball bearing assembly.

According to further examples, there is provided a centrifugal pump assembly according to claim 7. The pump assembly includes a removable filter assembly configured to be placed in the first filter cavity or the second filter cavity based on a rotation direction of the shaft. The filter assembly may include a filter portion configured to filter contaminated oil received from the chamber through an oil path and disperse the filtered oil to the channel effective to lubricate the bearing assembly in the chamber when the shaft is rotated, where the filter portion is replaceable; and a plug portion fluidically coupled to the filter portion and configured to pass the contaminated oil from the oil path to the filter portion, where the plug portion is reusable.

According to some examples, the contaminated oil and the filtered oil may be circulated through the filter assembly by a gravity feed or by oil pressure caused by the bearing assembly and the rotating shaft. The second filter cavity may be closed with a passive plug when the filter assembly is placed in the first filter cavity. The filter portion may include a substantially cylindrical liner material and a pleated filter medium that envelopes the liner material, the liner material having a plurality of holes for the filtered oil to seep out of the filter portion. The plug portion may include and adapter portion that defines a plug hole configured to pass the contaminated oil from the oil path within the housing to the filter portion. The filter assembly may further include a plurality of moisture absorbing beads or crystals inside the filter portion to remove moisture from the oil. The plug portion may include a knurled cap portion; and a threaded plug housing portion. The pump assembly may also include an oil ring inside the chamber, the oil ring configured to rotate along with the shaft and throw the contaminated oil into the oil path.

According to other examples, a method for manufacturing a centrifugal pump bearing system is described. The method includes forming a chamber within a first housing wall portion of a bearing housing to receive a combination of a bearing assembly and a shaft to be rotated; forming a sump within a second housing wall portion of the bearing housing in fluidic communication with the chamber to provide filtered oil to the chamber; forming a first filter cavity within a third housing wall portion of the bearing housing to receive contaminated oil from the chamber through an oil path and to disperse filtered oil to the sump through an oil channel; forming a second filter cavity within a fourth housing wall portion of the bearing housing to receive contaminated oil from the chamber through another oil path and to disperse filtered oil to the sump through another oil channel; constructing a filter assembly by fluidically coupling a replaceable filter portion to an adapter of a reusable plug portion, the plug portion configured to secure the filter assembly in the first or second filter cavity and direct received contaminated oil to the filter assembly, and the filter portion configured to filter the contaminated oil and disperse the filtered oil to the sump effective to lubricate the bearing assembly when the shaft is rotated; and removably placing the filter assembly in the first filter cavity or the second filter cavity based on a rotation direction of the shaft.

According to further examples, the method may also include mechanically coupling the bearing housing to a pump such that a rotation of the shaft is effective to rotate an impeller; disposing a plurality of moisture absorbing beads or crystals inside the filter portion to remove moisture from the oil; forming the bearing assembly as a ball-ball bearing assembly or a sleeve-ball bearing assembly.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

The foregoing and other features of this disclosure will become more fully apparent from the following description and appended claims, taken in conjunction with the accompanying drawings. Understanding that these drawings depict only several embodiments in accordance with the disclosure and are, therefore, not to be considered limiting of its scope, the disclosure will be described with additional specificity and detail through use of the accompanying drawings, in which:
FIG. 1A and 1B illustrate cross-sectional and perspective cutaway views of the bearing housing of an example ball-bearing pump assembly with a two-piece filter assembly;
FIG. 2A and 2B illustrate cross-sectional and perspective cutaway views of the bearing housing of an example sleeve-bearing pump assembly with a two-piece filter assembly;
FIG. 3A illustrates an external side view of an example two-piece filter assembly;
FIG. 3B illustrates a cross-sectional side view of an example two-piece filter assembly;
FIG. 3C illustrates an assembly view of an example two-piece filter assembly;
FIG. 4A illustrates a side view of a plug that forms a part of an example two-piece filter assembly;
FIG. 4B illustrates a side view of a plug for an empty filter cavity of a bearing housing;
FIG. 5 illustrates shaft rotation dependent assembly of a bearing housing with a two-piece filter assembly,
all arranged in accordance with at least some embodiments described herein.

### DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the spirit or scope of the subject matter presented herein. The aspects of the present disclosure, as generally described herein, and illustrated in the Figures, can be arranged, substituted, combined, separated, and designed in a wide variety of different configurations, all of which are explicitly contemplated herein.

This disclosure is generally drawn, *inter alia*, to methods, apparatus, systems and/or devices associated with two-piece filter assemblies for ball-bearing or sleeve-bearing pumps.

Briefly stated, technologies are generally described for a two-piece filter assembly for centrifugal pump assemblies. A filter portion optionally made from recyclable material may receive dirty oil from an oil sump of the pump assembly, filter, and provide the filtered oil through a plug portion of the filter assembly to a recirculation path of the bearing housing to lubricate bearings. The filter portion is removable from the plug portion and the plug portion may be placed back onto the pump assembly with a new filter portion. Moisture absorbing beads are placed inside the filter portion to remove moisture from the filtered oil.

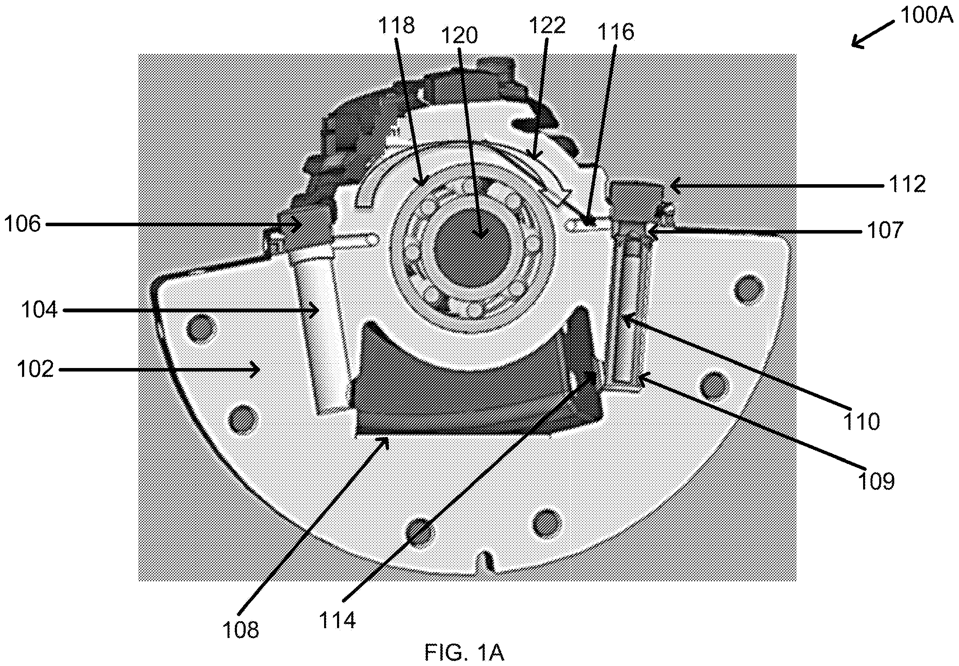

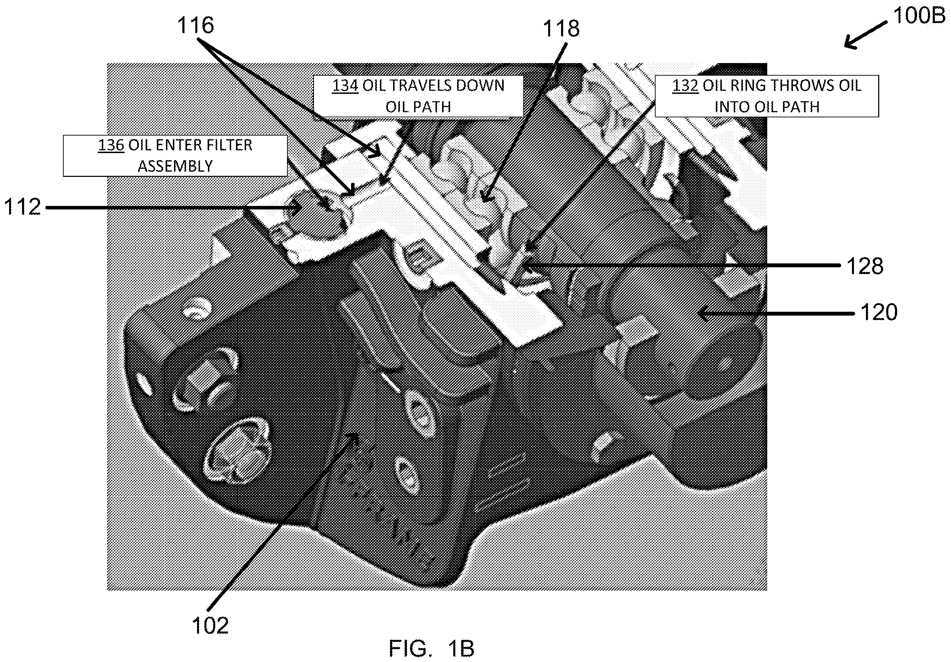

FIG. 1A and 1B illustrate cross-sectional and perspective cutaway views of the bearing housing of an example ball-bearing pump assembly with a two-piece filter assembly, arranged in accordance with at least some embodiments described herein.

Ball-ball bearing pump assembly 100A in FIG. 1A includes a bearing housing 102, first filter cavity 104, first plug 106, sump 108, second filter cavity 109, two-piece filter assembly 110, second plug 112 of the two-piece filter assembly 110, oil channel 114, oil path 116, ball bearings 118, shaft 120, and direction of shaft rotation 122.

The pump assembly 100A is an example of a dual rotation pump, where the shaft may be configured to rotate clockwise or counterclockwise. The bearing housing 102 includes two filter cavities (104, 109) for the two-piece filter assembly 110 to be placed in depending on a rotation direction 122 of the shaft 120. In the illustrated example configuration, the shaft 120 is shown as rotating clockwise and the two-piece filter assembly 110 is placed in filter cavity 109. First plug 106 is used to cover the empty first filter cavity 104. The shaft 120 is surrounded by the ball bearings 118. As the shaft 120 rotates, oil used to lubricate the ball bearings 118 is picked up by the oil ring 128 (shown in FIG. 1B) and is thrown as it rotates to the oil path 116, then travels to the filter adapter annulus 107 and down through the filter assembly 110, and out into the sump 108. Filtered oil is provided to the ball bearings 118 by the oil ring 128 that picks up oil from the sump 108. The first filter cavity 104, the sump 108, the second filter cavity 109, the oil channel 114, and the oil path 116 are defined by housing wall portions within the bearing housing 102.

Bearings reduce friction for moving or rotating parts and allow the parts to move or rotate smoothly. In a pump assembly, the shaft is keyed to an impeller and moves fluids through the pump assembly by rotating the impeller. Ball bearings 118 allow the shaft 120 to rotate freely. A ball bearing is a category of bearings that utilize spherical balls. A ball bearing may be made of an inner and outer race, with a series of balls between them, and a cage to hold the balls in place. Various parts of a ball bearing may be made from hardened steel and finished with precision.

Generating less heat due to lower contact area, ball bearings may operate with simple and inexpensive lubrication such as by oil bath, oil mist, or oil rings. Their narrow width may allow ball bearings to fit in compact housings, making the span of the shaft and bearing combination shorter, and resulting in lower shaft deflections.

During operation, a rotating shaft may encounter two types of forces or thrust loads. These are the axial thrust loads acting along the axis of the shaft and the radial thrust loads acting perpendicular to the axis of the shaft. For example, a major thrust on a shaft operating a centrifugal pump may be predominantly radial. Gravity may also play a role depending on whether the shaft is oriented vertically or horizontally. A vertical orientation may result in greater axial thrust, while a horizontal shaft may encounter higher radial thrust. As ball bearings can carry both axial and radial loads, they may be suitable for use in angular contacts.

Shown portions of the ball-ball bearing pump assembly 100B in FIG. 1B include bearing housing 102, second plug 112 of the two-piece filter assembly (not shown in this figure), the shaft 120, ball bearings 118 around the shaft 120, oil path 116, and an oil ring 128.

In an operation, lubrication oil is thrown (132) by the oil ring 128 into the oil path 116, travels down the oil path (134) to enter the filter assembly (136). In some examples, oil may travel down the oil path 116 via a gravity feed, or alternatively by oil pressure caused by the combination of the bearing assembly and the rotating shaft 120. The two-piece filter assembly may be secured in the filter cavity through threads on an outside surface of the second plug 112 or another securing mechanism.

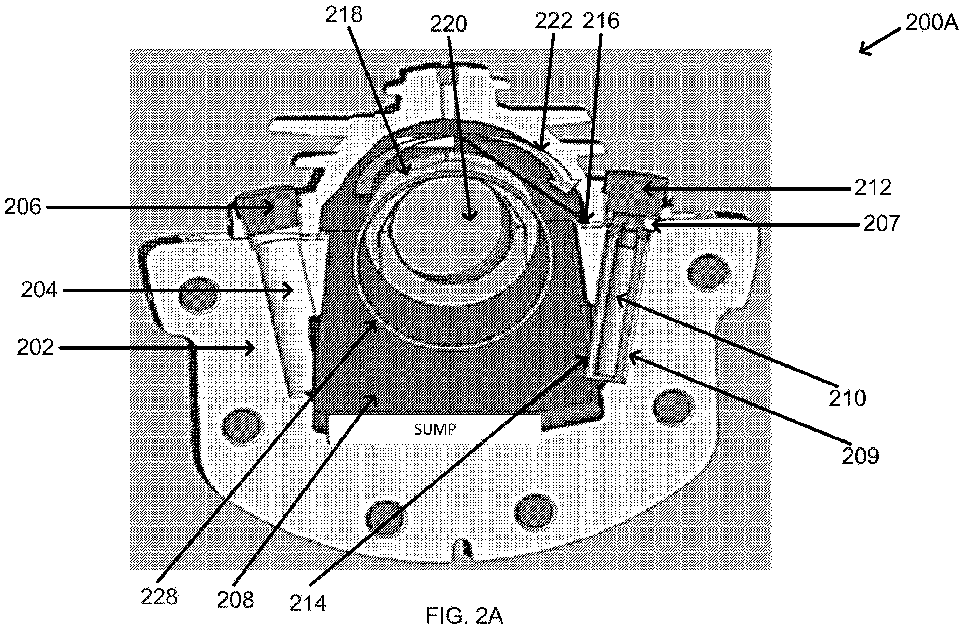

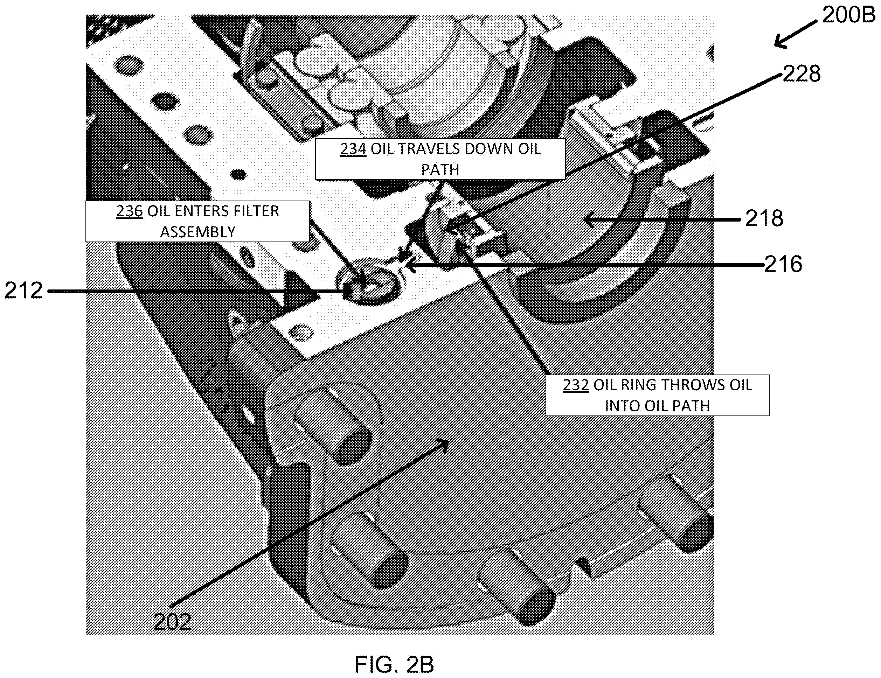

FIG. 2A and 2B illustrate cross-sectional and perspective cutaway views of the bearing housing of an example sleeve-bearing pump assembly with a two-piece filter assembly, arranged in accordance with at least some embodiments described herein.

Sleeve-Ball-bearing pump assembly 200A in FIG. 2A includes a bearing housing 202, first filter cavity 204, first plug 206, sump 208, second filter cavity 209, two-piece filter assembly 210, second plug 212 of the two-piece filter assembly 210, oil channel 214, oil path 216, sleeve bearings 218, shaft 220, and direction of shaft rotation 222 and oil ring 228.

As in FIG. 1A, the shaft 220 may be configured to rotate clockwise or counterclockwise, and the two-piece filter assembly 210 is placed in one of the two filter cavities (204, 209) depending on the rotation direction 222 of the shaft 220 such as filter cavity 209 in the illustrated example configuration. First plug 206 is used to cover the empty first filter cavity 204. The shaft 220 is surrounded by the sleeve bearings 218. As the shaft 220 rotates, oil used to lubricate the sleeve bearings 218 is picked up from the oil ring 228 and is thrown to the oil path 216, which catches the oil and fills up. The oil is then gravity fed to the filter adapter annulus 207, in some examples. The oil then travels down through the two-piece filter 210 and comes out through the oil channel 214 into the sump 208. In other examples, the bearing housing may include multiple recirculation channels, paths, and/or ports.

A sleeve bearing (also referred to as journal bearing) is a category of bearings that utilize substantially cylindrical sleeves. Sleeve bearings, as the name suggests, are shaped as a sleeve on the shaft. A small clearance exists between the bearing and the shaft, with a lubricant filling the space. Sleeve bearings may be made from porous, powdered metal using a sintering process, in some examples. Compared to relatively compact ball bearings, the sleeve bearing may be longer in an axial direction. While ball bearings can carry both radial and axial thrust loads, sleeve bearings are specifically meant to carry radial thrust loads, as they have no capacity to carry axial thrust loads. Sleeve bearings may have practically unlimited radial thrust capacity. However, they are more suitable for use in moderate to high-speed applications. Sleeve bearings may offer better stiffness than ball bearings do, and as they have split halves, they are easier to inspect or replace.

Shown portions of the sleeve-ball-bearing pump assembly 200B in FIG. 2B include bearing housing 202, second plug 212 of the two-piece filter assembly (not shown in this figure), sleeve bearing 218 (shown empty without the shaft 220), oil path 216, and an oil ring 228. In an operation, lubrication oil is picked by the oil ring 228 and is thrown to the oil path 216 (232), which catches the oil and fills up. The oil is gravity fed (234) to the filter adapter annulus 207 (236). The oil then travels down through the two-piece filter 210 and comes out through the oil channel 214 and into the sump 208.

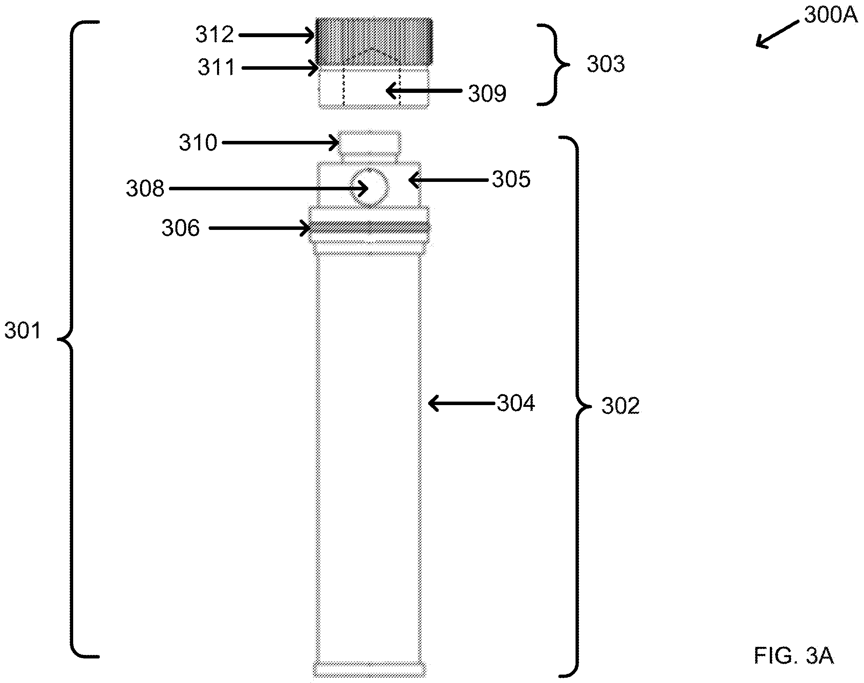

FIG. 3A illustrates an external side view of an example two-piece filter assembly, arranged in accordance with at least some embodiments described herein.

Diagram 300A in FIG. 3A shows a two-piece filter assembly 301. Two-piece filter assembly 301 includes a plug portion 303 and a filter portion 302. Filter portion 302 has a filter medium 304, adapter 305, O-ring 306, filter adapter annulus 308, and top ring 310. The plug portion 303 may be coupled to the filter portion 302. The plug portion 303 may include a plug 312, with an adapter top ring hole 309, and an O-ring 311.

The plug portion 303 may be placed over the top ring 310 in some examples. A top segment of the plug portion 303 may be knurled for manual removal or placement of the two-piece filter assembly. As discussed previously, the two-piece filter assembly 301 may be placed in a filter cavity defined by a portion of the bearing housing wall and be fluidically coupled between the oil sump and the oil path. The two-piece filter assembly 301 is configured to receive the contaminated oil thrown by the oil ring to the oil path, pass through the filter, and provide filtered oil to the sump.

Filter medium 304 of the filter portion 302 may be made from a porous filter medium such as microscopic cellulose fibers along with synthetic fibers (e.g., glass or polyester). In some examples, the medium may be saturated with resin for strength and stiffness. A body of the filter medium 304 may be shaped through folding (e.g., pleats) to increase a total surface area, and thereby, an efficiency of the filter. In an operation, contaminated oil flowing from the oil path 116 through the filter adapter annulus 308 into the space inside the filter medium 304 may pass through the filter medium 304 into a gap between the filter portion 302 and surrounding filter cavity (e.g., filter cavity 109), becoming filtered in the process. Gravity may pass the clean (filtered) oil in the gap through the oil channel and into the sump of the bearing housing. The plug portion 303 and the filter portion 302 may be coupled together through two sets of matching threads, a click-on type mechanism, a pressure-based mechanism, or similar ones.

A two-piece filter assembly according to examples may allow replacement of the filter portion without discarding the plug portion. The plug portion 303 and adapter 305 may be made from metal and non-metal parts. To provide a long-lasting plug portion, intricate details may be designed into the parts. Thus, the plug portion may be a relatively expensive component. Comparatively, the filter portion may be made from replaceable, relatively low-cost materials. Thus, cost efficiency may be achieved by replacing only the filter portion instead of the entire filter assembly. Furthermore, environmental concerns may be addressed by avoiding frequent disposal of the plug portion along with the filter assembly. For example, the filter portion may be made from paper and be easily recyclable as opposed to mainly metal plug portion.

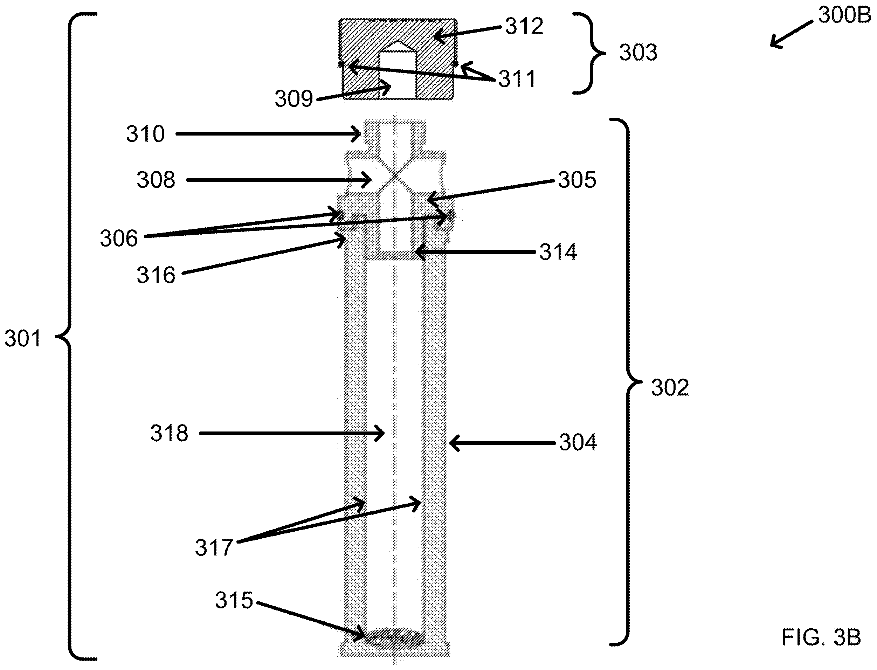

FIG. 3B illustrates a cross-sectional side view of an example two-piece filter assembly, arranged in accordance with at least some embodiments described herein.

In the cross-sectional view of diagram 300B, two-piece filter assembly 301 is shown with filter portion 302, filter medium 304, a collection space 318 inside the filter portion 302, adapter annulus hole 308, O-ring 306, stem 314 of the adapter 305, and securing mechanism location 316. Diagram 300B also shows moisture absorbing beads or crystals 315 at the bottom of the filter portion 302. The plug portion 303 includes a plug 312, with an adapter top ring hole 309, and an O-ring 311.

In some examples, an inside surface 317 of the filter portion, which may have a cylindrical or oblong cross section, may be lined with a metal or similar hard material to provide strength and durability to the filter portion. The lining material may include openings (e.g., hole of varying sizes and shapes) to allow filtered oil to seep out of the collection space 318. Filter adapter annulus 308 provides a path for the oil to flow into the filter assembly and out to the sump as discussed previously. Securing mechanism location 316 may hold the adapter 305 and the filter portion together. The illustrated example configuration may represent two or more screws that may hold the two components of the two-piece filter assembly 301 together. In other examples, two sets of complementary threads may secure the two components.

During an operational life of a pump assembly contaminants from the pumped liquids, shavings from the bearings (or other components of the pump) may accumulate in the lubrication oil and be filtered by the filter assembly. Water from condensation or leakage may also accumulate in the lubrication oil and may not necessarily be filtered by the filter portion 302. Moisture absorbing beads 315 or similar dehumidifying material (e.g., crystals) may be placed at the bottom of the filter portion 302 to remove moisture (water) from the filtered oil further increasing reliability and operational life expectancy of the pump assembly.

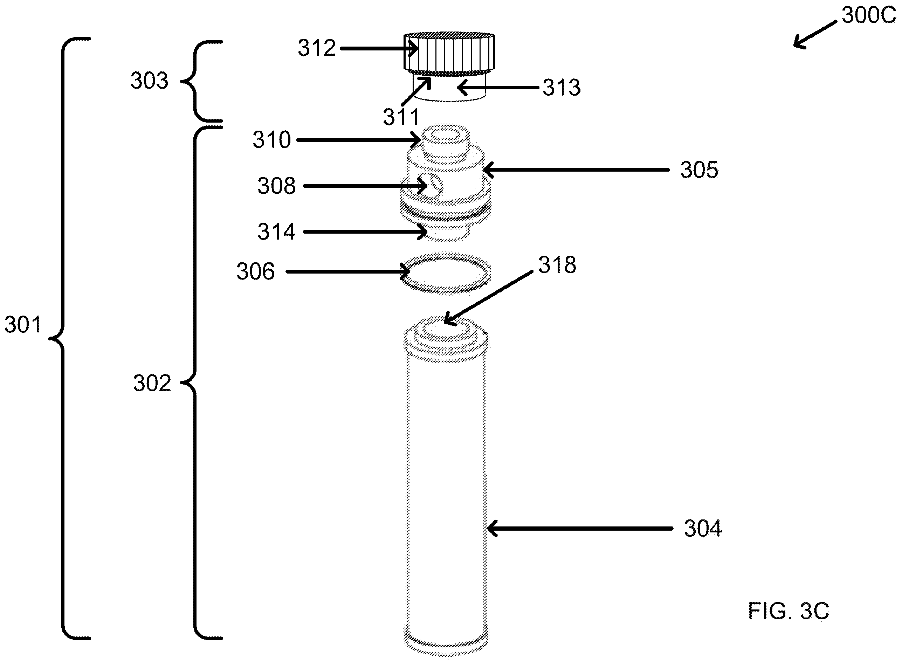

FIG. 3C illustrates an assembly view of an example two-piece filter assembly, arranged in accordance with at least some embodiments described herein.

The assembly view shown in diagram 300C includes two-piece filter assembly 301 with plug portion 303 and filter portion 302. Plug portion 303 includes O-ring 311, plug 312, and top ring adapter 313. Filter portion 302 includes top ring 310, adapter annulus hole 308, stem 314, O-ring 306, adapter 305, and filter medium 304 along with collection space 318 inside the filter medium 304.

An external circumference of the plug stem 314 and an internal circumference of the opening of collection space 318 may be selected such that the plug stem 314 is configured to fit snuggly inside the opening of collection space 318 and to maintain the moisture absorbing beads 315 in the filter portion 302. The O-ring 306 may provide a seal between the adapter 305 and the cavity to direct the contaminated oil through the filter. As discussed above, the plug portion 303 may be made from metal, metal alloy, ceramic, or similar materials, whereas the filter portion 302 (specifically, filter medium 304) may be made from lower cost, recyclable materials such as various forms of paper, fabric, etc.

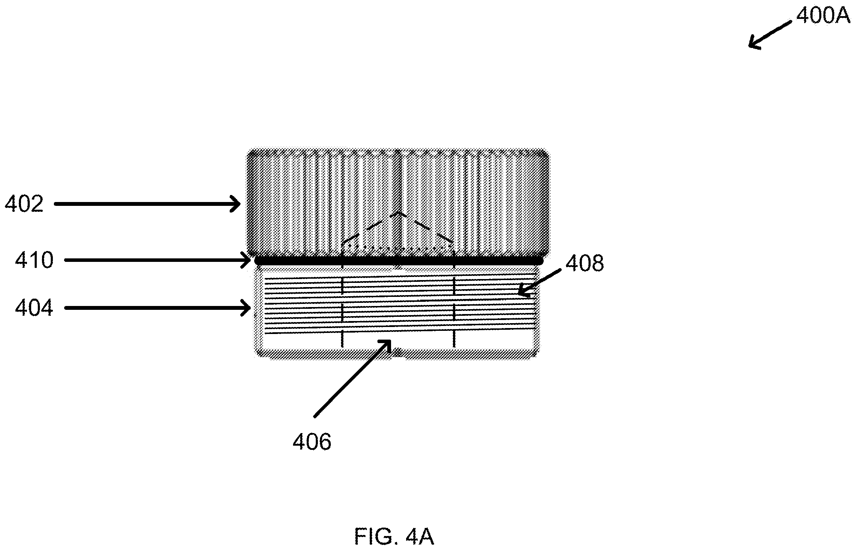

FIG. 4A illustrates a side view of a plug that forms a part of an example two-piece filter assembly, arranged in accordance with at least some embodiments described herein.

Diagram 400A shows a plug portion of the two-piece filter assembly with a cap portion 402, lower plug housing portion 404 with threads 408 on the lower plug housing portion 404, O-ring 410, and top ring hole 406.

The cap portion 402 may be knurled for manual placement and removal. Threads 408 on the lower plug housing portion 404 may allow the filter assembly to be secured into the filter cavity by mating with a complementary set of threads on an inside surface of the filter cavity and allowing the assembly to be installed hand tight.

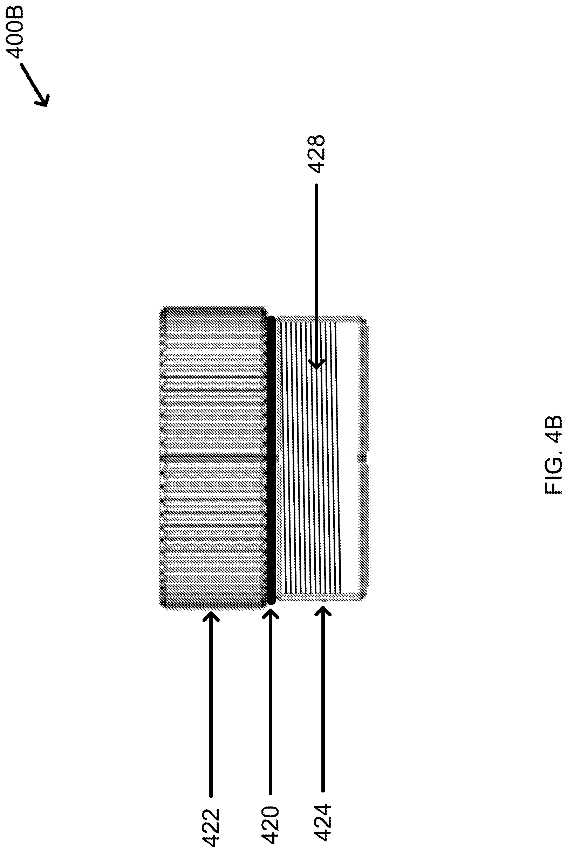

FIG. 4B illustrates a side view of a plug for an empty filter cavity of a bearing housing, arranged in accordance with at least some embodiments described herein.

Plug 400B includes a cap portion 422, a lower plug housing portion 424, O-ring 420, and threads 428 on the lower plug housing portion 424. Cap portion 422 may include knurls to allow manual placement and removal of the plug. Threads 428 on an outside surface of the lower plug housing portion 424 may be used with a complementary set of threads on an inside surface of a top portion of the empty filter cavity to secure the plug onto the filter cavity. In some examples, a click-on securing mechanism may be used in place of the threads. In other examples, one or more screws or similar mechanisms may be used as well. Plug 400B may be used as a passive plug on the empty filter cavity.

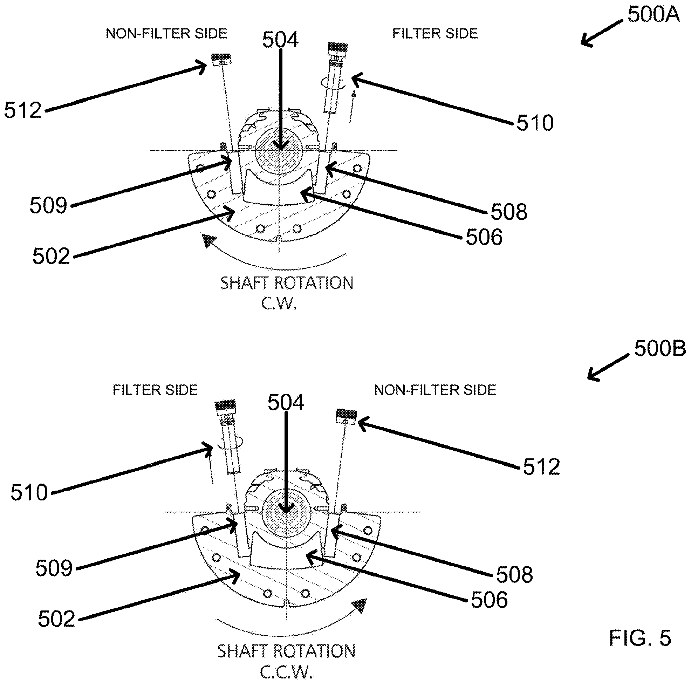

FIG. 5 illustrates shaft rotation dependent assembly of a bearing housing with a two-piece filter assembly, arranged in accordance with at least some embodiments described herein.

In diagram 500A of FIG. 5, a cross-sectional view of a bearing housing of a pump with clockwise shaft rotation is shown. Bearing housing 502 includes sump 506, shaft 504, first filter cavity 508, second filter cavity 509, two-piece filter assembly 510, and plug 512. Because of the clockwise rotation of the shaft 504, the two-piece filter assembly 510 is placed in the first filter cavity 508. The empty second filter cavity 509 is covered with plug 512. As shown in the diagram, the filter assembly 510 may be secured in the first filter cavity 508 through two sets of matching threads on the filter assembly and on an inside surface of the filter cavity. In other examples, the two-piece filter assembly may be secured through a click-on, or screw-on type mechanism, as well.

In diagram 500B of FIG. 5, a cross-sectional view of a bearing housing of a pump with counterclockwise shaft rotation is shown. Bearing housing 502 includes sump 506, shaft 504, first filter cavity 508, second filter cavity 509, two-piece filter assembly 510, and plug 512. Because of the counterclockwise rotation of the shaft 504, the two-piece filter assembly 510 is placed in the second filter cavity 509. The empty first filter cavity 508 is covered with plug 512. In some examples, shaft rotation direction of a pump may be reversed one or more times during an operational life of the pump. As the two-piece filter assembly 510 is configured to be removed and replaced (filter portion) easily, the location of the filter assembly may also be changed in case of shaft rotation direction reversal.

The benefits of the presently disclosed filter assembly are numerous. For example, lower cost filter portion may be replaced with ease (e.g., manually) at higher frequency compared to higher cost full filter replacements, and thereby allow enhancement of the pump assembly's reliability and life expectancy. Furthermore, environmental concerns may be addressed by avoiding frequent disposal of the plug portion along with the filter assembly. For example, the filter portion may be made from paper or similar recyclable material and frequent replacement may not trigger environmental concerns compared to metal parts of the plug portion.

The present disclosure is not to be limited in terms of the particular embodiments described in this application, which are intended as illustrations of various aspects. Functionally equivalent methods and apparatuses within the scope of the disclosure, in addition to those enumerated herein, are possible from the foregoing descriptions. Such modifications and variations are intended to fall within the scope of the appended claims. The present disclosure is to be limited only by the terms of the appended claims, along with the full scope of equivalents to which such claims are entitled. The terminology used herein is for the purpose of describing particular embodiments only and is not intended to be limiting.

The herein described subject matter sometimes illustrates different components contained within, or connected with, different other components. Such depicted architectures are merely examples, and in fact, many other architectures may be implemented which achieve the same functionality. In a conceptual sense, any arrangement of components to achieve the same functionality is effectively "associated" such that the desired functionality is achieved. Hence, any two components herein combined to achieve a particular functionality may be seen as "associated with" each other such that the desired functionality is achieved, irrespective of architectures or intermediate components. Likewise, any two components so associated may also be viewed as being "operably connected", or "operably coupled", to each other to achieve the desired functionality, and any two components capable of being so associated may also be viewed as being "operably couplable", to each other to achieve the desired functionality. Specific examples of operably couplable include but are not limited to physically connectable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

In general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation, no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations).

Furthermore, in those instances where a convention analogous to "at least one of A, B, and C, etc." is used, in general, such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

For any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein can be readily broken down into a lower third, middle third and upper third, etc. As will also be understood by one skilled in the art all language such as "up to," "at least," "greater than," "less than," and the like include the number recited and refer to ranges which can be subsequently broken down into subranges as discussed above. Finally, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

While various aspects and embodiments have been disclosed herein, other aspects and embodiments are possible. The various aspects and embodiments disclosed herein are for purposes of illustration. The invention is defined by the appended claims.

## Claims

1. An apparatus comprising:
a housing for a centrifugal pump assembly, the housing comprising:
a first housing wall portion that defines a chamber (102) formed therein, wherein the chamber is configured to receive a combination of a bearing assembly and a shaft to be rotated;
a second housing wall portion that defines a sump (108) formed therein and fluidically coupled to the chamber, wherein the sump is configured to receive filtered oil from a channel;
a third housing wall portion that defines the channel (114) formed therein and fluidically coupled to the sump, wherein the channel is configured to receive the filtered oil from a filter cavity and dispense to the sump; and
a fourth housing wall portion that defines the filter cavity (104) formed therein, distinct from the sump and the channel, and fluidically coupled to the channel, wherein the filter cavity is configured to receive contaminated oil from an oil path and disperse the filtered oil to the channel;
a fifth housing wall portion that defines another filter cavity (109) formed therein fluidically coupled between the chamber and the sump, wherein the other filter cavity is configured to disperse filtered oil from the filter and provide to the sump; and
a removable filter assembly (110) comprising:
a filter portion (302) configured to filter the contaminated oil received from the oil path and disperse the filtered oil to the channel effective to lubricate the bearing assembly in the chamber when the shaft is rotated, wherein the filter portion is replaceable; and
a plug portion (301) fluidically coupled to the filter portion and configured to pass the contaminated oil from the oil path to the filter portion, wherein the plug portion is reusable; **characterised in that**
the filter assembly is configured to be placed in the filter cavity or the other filter cavity based on a rotation direction of the shaft.

2. The apparatus of Claim 1, wherein the filter assembly further comprises a set of threads on a first portion of an outside surface of the plug portion and is configured to be secured to the filter cavity through another set of complementary threads on an inside surface of the filter cavity.

3. The apparatus of Claim 2, wherein a second portion of an outside surface of the plug portion is knurled for manual placement and removal of the filter assembly.

4. The apparatus of Claim 1, wherein the plug portion comprises and adapter portion that defines a plug hole configured to pass the contaminated oil from the oil path within the housing to the filter portion.

5. The apparatus of Claim 1, wherein the filter assembly further comprises a plurality of moisture absorbing beads inside the filter portion to remove moisture from the oil.

6. The apparatus of Claim 1, wherein the bearing assembly is one of a ball-ball bearing assembly and a sleeve-ball bearing assembly.

7. A centrifugal pump assembly (100A) comprising:
a pump;
an apparatus according to claim 1, wherein the housing of the apparatus is mechanically coupled to the pump.

8. The pump assembly of Claim 7, wherein the contaminated oil and the filtered oil are circulated through the filter assembly by a gravity feed or by oil pressure caused by the bearing assembly and the rotating shaft.

9. The pump assembly of Claim 7, wherein the second filter cavity is closed with a passive plug when the filter assembly is placed in the first filter cavity.

10. The pump assembly of Claim 7, wherein the filter portion comprises a substantially cylindrical liner material and a pleated filter medium that envelopes the liner material, the liner material having a plurality of holes for the filtered oil to seep out of the filter portion.

11. The pump assembly of Claim 7, wherein the plug portion comprises:
a knurled cap portion; and
a threaded plug housing portion.

12. The pump assembly of Claim 7, further comprising:
an oil ring inside the chamber, the oil ring configured to rotate along with the shaft and throw the contaminated oil into the oil path.

13. A method for manufacturing a centrifugal pump bearing system, the method comprising:
forming a chamber within a first housing wall portion of a bearing housing to receive a combination of a bearing assembly and a shaft to be rotated;
forming a sump within a second housing wall portion of the bearing housing in fluidic communication with the chamber to provide filtered oil to the chamber;
forming a first filter cavity within a third housing wall portion of the bearing housing to receive contaminated oil from the chamber through an oil path and to disperse filtered oil to the sump through an oil channel;
forming a second filter cavity within a fourth housing wall portion of the bearing housing to receive contaminated oil from the chamber through another oil path and to disperse filtered oil to the sump through another oil channel;
constructing a filter assembly by fluidically coupling a replaceable filter portion to an adapter of a reusable plug portion, the plug portion configured to secure the filter assembly in the first or second filter cavity and direct received contaminated oil to the filter assembly, and the filter portion configured to filter the contaminated oil and disperse the filtered oil to the sump effective to lubricate the bearing assembly when the shaft is rotated; and
removably placing the filter assembly in the first filter cavity or the second filter cavity based on a rotation direction of the shaft.

## Patentansprüche

1. Vorrichtung, umfassend:
ein Gehäuse für eine Zentrifugalpumpenanordnung, wobei das Gehäuse Folgendes umfasst:
einen ersten Gehäusewandabschnitt, der einen Raum (102) definiert, der darin ausgebildet ist, wobei der Raum dazu konfiguriert ist, eine Kombination aus einer Lageranordnung und einer zu drehenden Welle aufzunehmen;
einen zweiten Gehäusewandabschnitt, der einen Sumpf (108) definiert, der darin ausgebildet ist und in Fluidverbindung mit dem Raum steht, wobei der Sumpf dazu konfiguriert ist, gefiltertes Öl aus einem Kanal aufzunehmen;
einen dritten Gehäusewandabschnitt, der den Kanal (114) definiert, der darin ausgebildet ist und in Fluidverbindung mit dem Sumpf steht, wobei der Kanal dazu konfiguriert ist, das gefilterte Öl aus einem Filterhohlraum aufzunehmen und an den Sumpf abzugeben; und
einen vierten Gehäusewandabschnitt, der den Filterhohlraum (104) definiert, der darin ausgebildet ist, von dem Sumpf und dem Kanal verschieden ist und in Fluidverbindung mit dem Kanal steht, wobei der Filterhohlraum dazu konfiguriert ist, verunreinigtes Öl aus einem Ölweg aufzunehmen und das gefilterte Öl an den Kanal zu verteilen;
einen fünften Gehäusewandabschnitt, der einen anderen Filterhohlraum (109) definiert, der darin ausgebildet ist und in Fluidverbindung zwischen dem Raum und dem Sumpf steht, wobei der andere Filterhohlraum dazu konfiguriert ist, gefiltertes Öl aus dem Filter zu verteilen und dem Sumpf zuzuführen; und
eine entfernbare Filteranordnung (110), die Folgendes umfasst:
einen Filterabschnitt (302), der dazu konfiguriert ist, das verunreinigte Öl, das aus dem Ölweg aufgenommen wird, zu filtern und das gefilterte Öl in den Kanal zu verteilen, der wirksam ist, um die Lageranordnung in dem Raum zu schmieren, wenn die Welle gedreht wird, wobei der Filterabschnitt austauschbar ist; und
einen Stopfenabschnitt (301), der in Fluidverbindung mit dem Filterabschnitt steht und dazu konfiguriert ist, das verunreinigte Öl aus dem Ölweg zu dem Filterabschnitt zu leiten, wobei der Stopfenabschnitt wiederverwendbar ist; **dadurch gekennzeichnet, dass**
die Filteranordnung dazu konfiguriert ist, basierend auf einer Drehrichtung der Welle in dem Filterhohlraum oder dem anderen Filterhohlraum platziert zu werden.

2. Vorrichtung nach Anspruch 1, wobei die Filteranordnung ferner einen Satz Gewinde an einem ersten Abschnitt einer äußeren Oberfläche des Stopfenabschnitts umfasst und dazu konfiguriert ist, an dem Filterhohlraum durch einen anderen Satz komplementärer Gewinde an einer inneren Oberfläche des Filterhohlraums befestigt zu werden.

3. Vorrichtung nach Anspruch 2, wobei ein zweiter Abschnitt einer äußeren Oberfläche des Stopfenabschnitts zum manuellen Platzieren und Entfernen der Filteranordnung geriffelt ist.

4. Vorrichtung nach Anspruch 1, wobei der Stopfenabschnitt einen Adapterabschnitt umfasst, der ein Stopfenloch definiert, das dazu konfiguriert ist, das verunreinigte Öl aus dem Ölweg innerhalb des Gehäuses zu dem Filterabschnitt zu leiten.

5. Vorrichtung nach Anspruch 1, wobei die Filteranordnung ferner eine Vielzahl von feuchtigkeitsabsorbierenden Perlen im Inneren des Filterabschnitts umfasst, um Feuchtigkeit aus dem Öl zu entfernen.

6. Vorrichtung nach Anspruch 1, wobei die Lageranordnung eines von einer Kugel-Kugel-Lageranordnung und einer Hülsen-Kugel-Lageranordnung ist.

7. Zentrifugalpumpenanordnung (100A), umfassend:
eine Pumpe;
eine Vorrichtung gemäß Anspruch 1, wobei das Gehäuse der Vorrichtung mechanisch mit der Pumpe gekoppelt ist.

8. Pumpenanordnung nach Anspruch 7, wobei das verunreinigte Öl und das gefilterte Öl durch Schwerkraftspeisung oder durch Öldruck, der durch die Lageranordnung und die rotierende Welle verursacht wird, durch die Filteranordnung im Kreislauf geführt werden.

9. Pumpenanordnung nach Anspruch 7, wobei der zweite Filterhohlraum mit einem passiven Stopfen verschlossen ist, wenn die Filteranordnung in den ersten Filterhohlraum eingesetzt ist.

10. Pumpenanordnung nach Anspruch 7, wobei der Filterabschnitt ein im Wesentlichen zylindrisches Auskleidungsmaterial und ein gefaltetes Filtermedium umfasst, das das Auskleidungsmaterial umhüllt, wobei das Auskleidungsmaterial eine Vielzahl von Löchern aufweist, durch die das gefilterte Öl aus dem Filterabschnitt sickert.

11. Pumpenanordnung nach Anspruch 7, wobei der Stopfenabschnitt Folgendes umfasst:
einen geriffelten Kappenabschnitt; und
einen mit Gewinde versehenen Stopfengehäuseabschnitt.

12. Pumpenanordnung nach Anspruch 7, ferner umfassend:
ein Ölring innerhalb des Raums, wobei der Ölring dazu konfiguriert ist, sich zusammen mit der Welle zu drehen und das verunreinigte Öl in den Ölweg zu schleudern.

13. Verfahren zur Herstellung eines Lagersystems für eine Zentrifugalpumpe, wobei das Verfahren Folgendes umfasst:
Ausbilden eines Raums innerhalb eines ersten Gehäusewandabschnitts eines Lagergehäuses zum Aufnehmen einer Kombination aus einer Lageranordnung und einer zu drehenden Welle;
Ausbilden eines Sumpfes innerhalb eines zweiten Gehäusewandabschnitts des Lagergehäuses in Fluidverbindung mit dem Raum zum Bereitstellen von gefiltertem Öl für den Raum;
Ausbilden eines ersten Filterhohlraums innerhalb eines dritten Gehäusewandabschnitts des Lagergehäuses zum Aufnehmen von verunreinigtem Öl aus dem Raum durch einen Ölweg und Verteilen von gefiltertem Öl durch einen Ölkanal zu dem Sumpf;
Ausbilden eines zweiten Filterhohlraums innerhalb eines vierten Gehäusewandabschnitts des Lagergehäuses zum Aufnehmen von verunreinigtem Öl aus dem Raum durch einen anderen Ölweg und Verteilen von gefiltertem Öl durch einen anderen Ölkanal zu dem Sumpf;
Konstruieren einer Filteranordnung durch Erstellen einer Fluidverbindung von einem austauschbaren Filterabschnitt zu einem Adapter eines wiederverwendbaren Stopfenabschnitts, wobei der Stopfenabschnitt dazu konfiguriert ist, die Filteranordnung in dem ersten oder dem zweiten Filterhohlraum zu befestigen und aufgenommenes verunreinigtes Öl zu der Filteranordnung zu lenken, und wobei der Filterabschnitt dazu konfiguriert ist, das verunreinigte Öl zu filtern und das gefilterte Öl zu dem Sumpf zu verteilen, der wirksam ist, um die Lageranordnung zu schmieren, wenn die Welle gedreht wird; und
entfernbares Platzieren der Filteranordnung in dem ersten Filterhohlraum oder dem zweiten Filterhohlraum basierend auf einer Drehrichtung der Welle.

## Revendications

1. Appareil comprenant :
un boîtier pour un ensemble pompe centrifuge, le boîtier comprenant :
une première partie de paroi de boîtier qui définit une chambre (102) formée à l'intérieur de celle-ci, ladite chambre étant conçue pour recevoir une combinaison d'un ensemble palier et d'un arbre à faire tourner ;
une seconde partie de paroi de boîtier qui définit un carter (108) formé à l'intérieur de celle-ci et couplé fluidiquement à la chambre, ledit carter étant conçu pour recevoir de l'huile filtrée en provenance d'un canal ;
une troisième partie de paroi de boîtier qui définit le canal (114) formé à l'intérieur de celle-ci et couplé fluidiquement au carter, ledit canal étant conçu pour recevoir l'huile filtrée en provenance d'une cavité de filtre et la distribuer au carter ; et
une quatrième partie de paroi de boîtier qui définit la cavité (104) de filtre formée à l'intérieur de celle-ci, distincte du carter et du canal, et couplée fluidiquement au canal, ladite cavité de filtre étant conçue pour recevoir de l'huile contaminée en provenance d'un circuit d'huile et disperser l'huile filtrée dans le canal ;
une cinquième partie de paroi de boîtier qui définit une autre cavité (109) de filtre formée à l'intérieur de celle-ci, couplée fluidiquement entre la chambre et le carter, ladite autre cavité de filtre étant conçue pour disperser l'huile filtrée à partir du filtre et la fournir au carter ; et
un ensemble filtre amovible (110) comprenant :
une partie filtre (302) conçue pour filtrer l'huile contaminée reçue en provenance du circuit d'huile et disperser l'huile filtrée dans le canal de manière efficace pour lubrifier l'ensemble palier dans la chambre lorsque l'arbre tourne, ladite partie filtre étant remplaçable ; et
une partie bouchon (301) couplée fluidiquement à la partie filtre et conçue pour faire passer l'huile contaminée du circuit d'huile à la partie filtre, ladite partie bouchon étant réutilisable ; **caractérisé en ce que**
l'ensemble filtre est conçu pour être placé dans la cavité de filtre ou dans l'autre cavité de filtre sur la base d'un sens de rotation de l'arbre.

2. Appareil de la revendication 1, ledit ensemble filtre comprenant en outre un ensemble de filets sur une première partie d'une surface extérieure de la partie bouchon et étant conçu pour être fixé à la cavité de filtre par l'intermédiaire d'un autre ensemble de filets complémentaires sur une surface intérieure de la cavité de filtre.

3. Appareil de la revendication 2, une seconde partie d'une surface extérieure de la partie bouchon étant moletée pour le placement et le retrait manuels de l'ensemble filtre.

4. Appareil de la revendication 1, ladite partie bouchon comprenant une partie adaptateur qui définit un trou de bouchon conçu pour faire passer l'huile contaminée du circuit d'huile à l'intérieur du boîtier vers la partie filtre.

5. Appareil de la revendication 1, ledit ensemble filtre comprenant en outre une pluralité de billes absorbant l'humidité à l'intérieur de la partie filtre pour éliminer l'humidité de l'huile.

6. Appareil de la revendication 1, ledit ensemble palier étant l'un d'un ensemble palier à billes et un ensemble palier à manchon et à billes.

7. Ensemble pompe centrifuge (100A) comprenant :
une pompe ;
un appareil selon la revendication 1, ledit boîtier de l'appareil étant mécaniquement couplé à la pompe.

8. Ensemble pompe de la revendication 7, ladite huile contaminée et ladite huile filtrée circulant à travers l'ensemble filtre par une alimentation par gravité ou par une pression d'huile engendré par l'ensemble palier et l'arbre rotatif.

9. Ensemble pompe de la revendication 7, ladite seconde cavité de filtre étant fermée avec un bouchon passif lorsque l'ensemble filtre est placé dans la première cavité de filtre.

10. Ensemble pompe de la revendication 7, ladite partie filtre comprenant un matériau de revêtement sensiblement cylindrique et un milieu filtrant plissé qui enveloppe le matériau de revêtement, le matériau de revêtement comportant une pluralité de trous pour que l'huile filtrée s'échappe de la partie filtrante.

11. Ensemble pompe de la revendication 7, ladite partie bouchon comprenant :
une partie capuchon moletée ; et
une partie de boîtier de bouchon filetée.

12. Ensemble pompe de la revendication 7, comprenant en outre :
une bague de lubrification à l'intérieur de la chambre, la bague de lubrification étant conçue pour tourner avec l'arbre et projeter l'huile contaminée dans le circuit d'huile.

13. Procédé permettant la fabrication d'un système de palier de pompe centrifuge, le procédé comprenant :
la formation d'une chambre à l'intérieur d'une première partie de paroi de boîtier d'un boîtier de palier pour recevoir une combinaison d'un ensemble palier et d'un arbre à faire tourner ;
la formation d'un carter à l'intérieur d'une seconde partie de paroi de boîtier du boîtier de palier en communication fluidique avec la chambre pour fournir de l'huile filtrée à la chambre ;
la formation d'une première cavité de filtre à l'intérieur d'une troisième partie de paroi de boîtier du boîtier de palier pour recevoir l'huile contaminée en provenance de la chambre à travers un chemin d'huile et pour disperser l'huile filtrée vers le carter à travers un canal d'huile ;
la formation d'une seconde cavité de filtre à l'intérieur d'une quatrième partie de paroi de boîtier du boîtier de palier pour recevoir l'huile contaminée en provenance de la chambre à travers un autre circuit d'huile et pour disperser l'huile filtrée vers le carter à travers un autre canal d'huile ;
la construction d'un ensemble filtre en couplant fluidiquement une partie filtre remplaçable à un adaptateur d'une partie bouchon réutilisable, la partie bouchon conçue pour fixer l'ensemble filtre dans la première ou la seconde cavité de filtre et diriger l'huile contaminée reçue vers l'ensemble filtre, et la partie filtre conçue pour filtrer l'huile contaminée et disperser l'huile filtrée vers le carter, de manière efficace pour lubrifier l'ensemble palier lorsque l'arbre tourne ; et
le placement de manière amovible de l'ensemble filtre dans la première cavité de filtre ou la seconde cavité de filtre sur la base d'un sens de rotation de l'arbre.
